# EUROPÄISCHE PATENTSCHRIFT

(11) **EP 2 600 007 B1**
(45) Veröffentlichungstag und Bekanntmachung des Hinweises auf die Patenterteilung: **15.05.2019**
(21) Anmeldenummer: 12188786.3
(22) Anmeldetag: 17.10.2012
(51) Int. Cl.: F04D 29/056, F02C 6/12

(54) **Kraftfahrzeugsystemeinrichtung sowie Verfahren zum Betreiben einer Kraftfahrzeugsystemeinrichtung**
Motor vehicle system device and method for operating a motor vehicle system device
Dispositif de système automobile et procédé de fonctionnement d'un dispositif de système automobile

(30) Priorität: 01.12.2011 DE 102011087606
(43) Veröffentlichungstag der Anmeldung: 05.06.2013
(73) Patentinhaber: ROBERT BOSCH GMBH, 70442 Stuttgart (DE)
(72) Erfinder: Stein, Matthias, 70825 Korntal-Muenchingen (DE); Steidten, Thomas, 71636 Ludwigsburg (DE)

(56) Entgegenhaltungen:
- EP-A1- 0 102 334
- DE-A1- 10 248 848
- US-A- 4 355 850
- US-A- 4 808 070
- US-B1- 6 231 302

## Beschreibung

Die Erfindung betrifft eine Kraftfahrzeugsystemeinrichtung mit einem Antriebsaggregat, dem eine Ladereinrichtung zugeordnet ist, die einen Verdichter mit wenigstens einem mittels zumindest eines Lagers gelagerten Verdichterlaufrad aufweist, wobei das Lager über ein stationäres erstes Lagerteil und ein mit dem Verdichterlaufrad wirkverbundenes zweites Lagerteil verfügt. Die Erfindung betrifft weiterhin ein Verfahren zum Betreiben einer Kraftfahrzeugsystemeinrichtung.

### Stand der Technik

Kraftfahrzeugsystemeinrichtungen der eingangs genannten Art sind aus dem Stand der Technik bekannt. Sie weisen prinzipiell beliebige Einrichtungen beziehungsweise Systeme des Kraftfahrzeugs auf, insbesondere das Antriebsaggregat. Dem Antriebsaggregat soll die Ladereinrichtung zugeordnet sein. Diese dient der Leistungssteigerung des Antriebsaggregats, wobei das Antriebsaggregat beispielsweise eine Brennkraftmaschine oder ein Brennstoffzellenantriebsaggregat mit wenigstens einer Brennstoffzelle sein kann. Die Ladereinrichtung weist den Verdichter auf, welcher zum Verdichten von Fluid, insbesondere Gas, beispielsweise Luft, vorgesehen ist. Das mittels der Ladereinrichtung verdichtete Fluid wird üblicherweise dem Antriebsaggregat zugeführt. Auf diese Weise kann die spezifische Leistung des Antriebsaggregats deutlich erhöht werden. Eine derartige Ladereinrichtung ist aus dem Patent US 6 231 302 B1 bekannt.

Zum Verdichten des Fluids weist der Verdichter das Verdichterlaufrad auf, welches mittels des Lagers insbesondere in einem Gehäuse beziehungsweise Verdichtergehäuse gelagert ist. Das Lager setzt sich aus zwei Lagerteilen, nämlich dem ersten Lagerteil und dem zweiten Lagerteil zusammen. Das erste Lagerteil ist üblicherweise stationär, rotiert also nicht, während das zweite Lagerteil dem Verdichterlaufrad zugeordnet beziehungsweise mit diesem drehsteif, also zum Rotieren mit gleicher Drehzahl, verbunden ist. Es liegt also eine Wirkverbindung zwischen dem zweiten Lagerteil und dem Verdichterlaufrad vor. Beispielsweise liegt das erste Lagerteil als Lagerbuchse und das zweite Lagerteil als Wellenbereich einer Welle vor, auf welcher das Verdichterlaufrad drehfest angeordnet ist.

Die Ladereinrichtung beziehungsweise der Verdichter wird üblicherweise in Abhängigkeit von einem Betriebszustand des Antriebsaggregats angesteuert, wobei das Verdichterlaufrad und entsprechend das zweite Lagerteil gegenüber dem ersten Lagerteil wechselnde Drehzahlen aufweisen können. Das Verdichterlaufrad kann dabei sehr hohe Drehzahlen, insbesondere größer als 100.000 U/min erreichen. Dies stellt extrem hohe Anforderungen an das Lager, welches beispielsweise als Gleitlager ausgebildet ist. Bei aus dem Stand der Technik bekannten Kraftfahrzeugsystemeinrichtungen kann das Lager einem hohen Verschleiß unterworfen sein.

### Offenbarung der Erfindung

Demgegenüber weist die Kraftfahrzeugsystemeinrichtung mit den Merkmalen des Anspruchs 1 den Vorteil auf, dass der Verschleiß des Lagers mit geringem Aufwand deutlich verringert werden kann. Dies wird erfindungsgemäß erreicht, indem an das Lager eine Überdruckquelle angeschlossen ist, mittels welcher in einem zwischen dem ersten Lagerteil und dem zweiten Lagerteil vorliegenden Lagerspalt ein Überdruck herstellbar ist, wobei die Überdruckquelle der Verdichter und/oder Teil einer Tandempumpe ist, die neben dem Überdruck auch Unterdruck für einen in dem Kraftfahrzeug vorgesehenen Verbraucher bereitstellt. Grundsätzlich kann das Lager, bestehend aus dem ersten Lagerteil und dem zweiten Lagerteil, als fluiddynamisches, also hydro- beziehungsweise aerodynamisches, oder fluidstatisches, also hydro- beziehungsweise aerostatisches, Gleitlager ausgeführt sein. Bei dem Lager soll also eine sogenannte Fluidlagerung beziehungsweise Luftlagerung, insbesondere bei höheren Drehzahlen des Verdichterlaufrads, zwischen dem ersten und dem zweiten Lagerteil erzielt werden. Das Lager ist insoweit als Luftlager ausgebildet, bei welchem während des Betriebs bevorzugt zumindest in einigen Betriebsbereichen lediglich Fluidreibung, insbesondere Luftreibung, auftritt. Die beiden Lagerteile treten dabei nicht unmittelbar miteinander in Berührkontakt. Entsprechend ist der Verschleiß des Lagers gegenüber Lagern, in welchen Festkörperreibung oder Mischreibung auftritt, deutlich reduziert.

Bei dem fluiddynamischen Lager kann der zur Darstellung der Lagerfunktion benötigte Überdruck durch die beiden Lagerteile im Wesentlichen selbst aufgebracht werden, falls eine ausreichend hohe Drehzahl des Verdichterlaufrads beziehungsweise der Welle vorliegt. Bei einer Drehzahl unterhalb der für den Aufbau des Überdrucks notwendigen Mindestdrehzahl tritt Festkörperreibung oder Mischreibung in dem Lager auf. Dabei stehen die beiden Lagerteile unmittelbar in Berührkontakt, was erhöhten Verschleiß zur Folge hat. Um diesen zu verringern und um die Lebenslauer des Lagers zu verlängern, kommen häufig teure Werkstoffe zum Einsatz. Insbesondere, wenn das Antriebsaggregat für einen Start-Stopp-Betrieb ausgelegt ist, ist ein erheblicher Aufwand zu treffen, um eine ausreichende Lebensdauer des Lagers zu erzielen. Das fluiddynamische Lager muss dagegen stets mittels der Überdruckquelle mit unter Druck stehendem Fluid, insbesondere Gas, versorgt werden. Entsprechend muss die Überdruckquelle stets zur Verfügung stehen, beispielsweise in Form eines externen Kompressors. Dies beeinflusst jedoch die Kosten sowie den Platzbedarf der Kraftfahrzeugsystemeinrichtung und insbesondere der Ladereinrichtung, negativ.

Um die Versorgung des Lagers mit Überdruck mit möglichst geringem baulichen Aufwand und möglichst geringem Platzbedarf zu realisieren, soll als Überdruckquelle der Verdichter oder ein Teil einer Tandempumpe dienen. Es versteht sich von selbst, dass die Tandempumpe nicht vorhanden sein muss, wenn als Überdruckquelle der Verdichter dient. Neben dem als Überdruckquelle dienenden Überdruckteil weist die Tandempumpe zusätzlich einen Unterdruckteil auf, mittels welchem sie neben dem Überdruck auch Unterdruck für den Verbraucher der Kraftfahrzeugsystemeinrichtung beziehungsweise des Kraftfahrzeugs bereitstellen kann. Der Verbraucher ist entsprechend ein Unterdruckverbraucher. Unter dem Überdruck ist hier ein Druck zu verstehen, welcher größer als ein Referenzdruck ist. Der Unterdruck ist dagegen kleiner als der Referenzdruck. Als Referenzdruck kann beispielsweise der Umgebungsdruck beziehungsweise Atmosphärendruck herangezogen werden. Durch die Verwendung des Verdichters beziehungsweise der Tandempumpe als Überdruckquelle für das Lager ergeben sich insbesondere Vorteile hinsichtlich des Platzbedarfs. Zudem kann eine Kostenreduzierung durch die Vermeidung zusätzlicher Bauteile, insbesondere der externen Überdruckquelle, erzielt werden.

Ist das Lager ein fluiddynamisches Lager, so kann mittels der Überdruckquelle auch unterhalb der Mindestdrehzahl in dem Lagerspalt ein ausreichend großer Überdruck erzeugt werden, welche das Betreiben des Lagers lediglich mit Fluidreibung ermöglicht. Alternativ kann - auch bei einer Drehzahl, welche größer als die Mindestdrehzahl ist - der mittels der Überdruckquelle bereitgestellte Überdruck den selbsttätig durch die beiden Lagerteile erzeugten Überdruck deutlich übersteigen, sodass auch eine größere Tragfähigkeit des Lagers gegeben ist. Weitere Vorteile liegen in der besseren Kühlung, weil das Lager permanent von dem durch die Überdruckquelle geförderten Fluid durchströmt wird. Entsprechend liegen in dem Lager niedrigere Temperaturen vor. Auf diese Weise werden ein geringerer Verschleiß und damit eine höhere Bauteilzuverlässigkeit erreicht. Auch kann auf günstigere Werkstoffe zurückgegriffen beziehungsweise auf teure Beschichtungen verzichtet werden, wodurch eine kostengünstige Herstellung des Lagers beziehungsweise der gesamten Kraftfahrzeugsystemeinrichtung ermöglicht wird. Es kann auch das Lager verkleinert werden, wenn der Überdruck groß genug ist.

Eine Weiterbildung der Erfindung sieht vor, dass strömungstechnisch zwischen der Überdruckquelle und dem Lager eine Querschnittsverminderungseinrichtung oder eine Querschnittsverstelleinrichtung zur Einstellung des in dem Lagerspalt hergestellten Überdrucks vorgesehen ist. Üblicherweise kann die Überdruckquelle einen Überdruck erzeugen, welcher deutlich höher ist, als der vor dem Lagerspalt benötigte Überdruck, insbesondere weil der selbst aufgebaute Lagerdruck bei höheren Drehzahlen hoch genug ist. Entsprechend ist die Querschnittsverminderungseinrichtung oder die Querschnittsverstelleinrichtung vorgesehen. Die Querschnittsverminderungseinrichtung ist beispielsweise eine Drossel oder eine Blende, welche nicht verstellbar ist, also stets eine konstante Querschnittsverminderung in der Strömungsverbindung zwischen der Überdruckquelle und dem Lager bewirkt. Mittels der Querschnittsverstelleinrichtung ist dagegen ein gesteuertes und/oder geregeltes Einstellen des in dem Lagerspalt vorliegenden Überdrucks möglich. Die Querschnittsverstelleinrichtung liegt beispielsweise als Ventil vor. Dabei kann beispielsweise ein einfaches Ein-/Ausschaltventil verwendet werden. Dabei kann beispielsweise ein einfaches Ein-/Ausschaltventil verwendet werden.

Eine Weiterbildung der Erfindung sieht vor, dass das Verdichterlaufrad von einer Turbine der Ladereinrichtung und/oder einer elektrischen Antriebsvorrichtung antreibbar ist. Die Ladereinrichtung kann also die Turbine aufweisen, welcher Abgas, insbesondere Abgas des Antriebsaggregats, zuführbar ist. Die Turbine liegt demnach als Abgasturbine vor. Die Turbine beziehungsweise ein Turbinenlaufrad der Turbine ist mit dem Verdichter beziehungsweise dessen Verdichterlaufrad derart wirkverbunden, dass mittels der von Abgas durchströmten Turbine der Verdichter antreibbar ist. In diesem Fall ist die Ladereinrichtung als Abgasturboladereinrichtung ausgebildet. Dabei wird der Antrieb des Verdichters mit der dem Abgas mittels der Turbine entnommenen Strömungsenergie realisiert. Die Wirkverbindung zwischen der Turbine beziehungsweise deren Turbinenlaufrad und dem Verdichter beziehungsweise dessen Verdichterlaufrad wird üblicherweise mittels einer Welle realisiert, welche zumindest bereichsweise in einem Rumpfgehäuse aufgenommen ist, wobei die Welle sowohl mit der Turbine beziehungsweise dem Turbinenlaufrad als auch dem Verdichter beziehungsweise dem Verdichterlaufrad wirkverbunden, insbesondere drehsteif verbunden, ist.

Alternativ oder zusätzlich kann der Antrieb des Verdichters mittels einer Antriebsvorrichtung, insbesondere einem Elektromotor, realisiert werden. In ersterem Fall liegt keine Turbine vor und die Antriebsvorrichtung ist mit der Welle zum zumindest zeitweiligen Antreiben des Verdichters wirkverbunden. In letzterem Fall ist neben dem Verdichter auch die Antriebsvorrichtung mit der Welle wirkverbunden oder zumindest wirkverbindbar. Die Antriebsvorrichtung unterstützt insofern zumindest zeitweise die Turbine beim Antreiben des Verdichters. Dabei stellen die Antriebsvorrichtung und die Turbine gemeinsam das zum Antreiben des Verdichters benötigte Drehmoment bereit. Die vorstehend beschriebene Welle dient insbesondere der Lagerung des Verdichterlaufrads des Verdichters, welchem sie zugeordnet ist. Zusätzlich kann auch die Lagerung des Turbinenlaufrads der Turbine mittels der Welle beziehungsweise der Antriebsvorrichtung, insbesondere dem Elektromotor, realisiert sein. Diese Lagerung wird mit Hilfe des Lagers, welches entsprechend als Wellenlager ausgebildet ist, erzielt.

Eine Weiterbildung der Erfindung sieht vor, dass das Antriebsaggregat ein Brennstoffzellenaggregat mit wenigstens einer Brennstoffzelle und zumindest einer von der Brennstoffzelle mit elektrischer Energie gespeisten elektrischen Maschine ist. Brennstoffzellen benötigen häufig eine Luftversorgungseinrichtung, um ihr einen Oxidator, beispielsweise Sauerstoff beziehungsweise Umgebungsluft, für den Energieträger, beispielsweise Wasserstoff, zuzuführen. Dabei wird als Luftversorgungseinrichtung der Verdichter verwendet, der, wie bereits vorstehend beschrieben, von der Turbine und/oder der elektrischen Antriebsvorrichtung antreibbar ist. Als Luftversorgungseinrichtung kann beispielsweise eine Verdrängermaschine, wie zum Beispiel ein Rootsgebläse oder ein Schraubenverdichter, eingesetzt werden. Aufgrund ihres guten Wirkungsgrads sowie ihres geringen Bauraums werden allerdings vermehrt Turbomaschinen, also Turbolader mit Verdichter und Turbine, als Luftversorgungseinrichtung für die Brennstoffzelle verwendet. Alternativ kann das Antriebsaggregat selbstverständlich auch als Brennkraftmaschine ausgebildet sein oder eine solche aufweisen.

Eine Weiterbildung der Erfindung sieht vor, dass die Tandempumpe elektrisch angetrieben ist. Weist die Kraftfahrzeugsystemeinrichtung eine Brennkraftmaschine auf, so kann der Unterdruck für den Verbraucher von dieser bereitgestellt werden, insbesondere an einem Saugrohr der Brennkraftmaschine. Ist dagegen das Antriebsaggregat ein Brennstoffzellenaggregat, so entfällt diese Möglichkeit. Der Unterdruck muss daher auf anderem Wege für den Verbraucher bereitgestellt werden, beispielsweise mittels einer elektrisch angetriebenen Pumpe. So ist sowohl für das Bereitstellen des Unterdrucks für den Verbraucher als auch für das Bereitstellen des Überdrucks für das Lager jeweils eine Pumpe notwendig. Das Verbauen von zwei Pumpen ist jedoch zum einen kostenträchtig und zum anderen vergrößert es den notwendigen Bauraum. Aus diesem Grund wird die Tandempumpe verwendet, mittels welcher sowohl der Überdruck als auch der Unterdruck erzeugt und bereitgestellt werden kann. Die Tandempumpe ist dabei mit einem elektrischen Antrieb versehen.

Eine Weiterbildung der Erfindung sieht vor, dass das Lager als aerodynamisches oder aerostatisches Gleitlager ausgeführt ist. Wie bereits vorstehend ausgeführt, ist das Lager üblicherweise als Gleitlager ausgebildet, wobei das Gleitlager entweder für aerodynamischen (fluiddynamischen) oder aerostatischen (fluidstatischen) Betrieb ausgelegt sein kann.

Eine Weiterbildung der Erfindung sieht vor, dass das Lager ein Axiallager und/oder ein Radiallager ist. Selbstverständlich können auch mehrere Lager vorgesehen sein, wobei in diesem Fall wenigstens ein Axiallager und/oder wenigstens ein Radiallager vorliegt. Es kann insbesondere vorgesehen sein, dass zwei Radiallager und ein Axiallager vorliegen, wobei die elektrische Antriebsvorrichtung zwischen den beiden Radiallagern auf der mit dem Verdichterlaufrad wirkverbundenen Welle angeordnet ist. Das Axiallager liegt dagegen zum Beispiel zwischen dem Verdichterlaufrad und dem dem Verdichterlaufrad zugewandten Radiallager vor. Auf diese Weise ist die Welle beziehungsweise das Verdichterlaufrad sowohl in radialer Richtung als auch in axialer Richtung festgelegt. Dient das Lager gleichzeitig als Axiallager und als Radiallager, so kann es als Kombilager bezeichnet werden.

Eine Weiterbildung der Erfindung sieht vor, dass der Verbraucher ein Bremskraftverstärker ist. Die Kraftfahrzeugsystemeinrichtung weist demnach zusätzlich den Bremskraftverstärker auf, welcher an die Tandempumpe strömungstechnisch angeschlossen ist. Auf diese Weise kann die Tandempumpe dem Bremskraftverstärker den für dessen Betrieb notwendigen Unterdruck (meist pneumatisch) bereitstellen.

Die Erfindung betrifft selbstverständlich auch ein Kraftfahrzeug mit einer Kraftfahrzeugsystemeinrichtung gemäß den vorstehenden Ausführungen.

Die Erfindung betrifft weiterhin ein Verfahren zum Betreiben einer Kraftfahrzeugsystemeinrichtung, insbesondere gemäß den vorstehenden Ausführungen, wobei die Kraftfahrzeugssystemeinrichtung mit einem Antriebsaggregat ausgestattet ist, dem eine Ladereinrichtung zugeordnet ist, die einen Verdichter mit wenigstens einem mittels zumindest eines Lagers gelagerten Verdichterlaufrad aufweist, wobei das Lager über ein stationäres erstes Lagerteil und ein mit dem Verdichterlaufrad wirkverbundenes zweites Lagerteil verfügt. Dabei ist vorgesehen, dass an das Lager eine Überdruckquelle angeschlossen ist, mittels welcher in einem zwischen dem ersten Lagerteil und dem zweiten Lagerteil vorliegenden Lagerspalt in wenigstens einem Betriebszustand der Ladereinrichtung ein Überdruck hergestellt wird, wobei die Überdruckquelle der Verdichter und/oder Teil einer Tandempumpe ist, die neben dem Überdruck auch Unterdruck für einen in dem Kraftfahrzeug vorgesehenen Verbraucher bereitstellt. Die Kraftfahrzeugsystemeinrichtung kann gemäß den vorstehenden Ausführungen weitergebildet sein.

Bei dem Betreiben ist es, insbesondere bei Verwendung eines fluiddynamischen Gleitlagers als Lager, nicht notwendig, dass die Überdruckquelle dem Lager permanent Überdruck zur Verfügung stellt. Vielmehr kann es bei einer Drehzahl des Verdichterlaufrads beziehungsweise der mit diesem wirkverbundenen Welle zu einem selbsttätigen Aufbauen des Überdrucks in dem Lagerspalt, bedingt durch die Relativbewegung zwischen dem ersten Lagerteil und dem zweiten Lagerteil, kommen. Der Überdruck muss dem Lager also nicht permanent von der Überdruckquelle zur Verfügung gestellt werden. Gleichwohl kann dies vorgesehen sein, um beispielsweise den in dem Lagerspalt vorliegenden Überdruck zu vergrößern und entsprechend die Tragfähigkeit des Lagers zu verbessern. Ob dem Lager mittels der Überdruckquelle der Überdruck zur Verfügung gestellt wird, hängt von dem momentanen Betriebszustand der Ladereinrichtung ab. So kann es vorgesehen sein, dass in dem wenigstens einen Betriebszustand der in dem Lagerspalt vorliegende Überdruck mittels der Überdruckquelle hergestellt wird. In einem anderen Betriebszustand ist dies jedoch nicht der Fall.

Eine Weiterbildung der Erfindung sieht vor, dass nur in einem Betriebszustand, in welchem die Drehzahl des Verdichters kleiner als eine bestimmte Mindestdrehzahl ist, mittels der Überdruckquelle der (ausreichend große) Überdruck zwischen den Lagerteilen hergestellt wird. Wie bereits vorstehend beschrieben, kann sich der Überdruck in dem Lager selbsttätig aufbauen, wenn die Drehzahl des Verdichterlaufrads größer oder gleich der bestimmten Mindestdrehzahl ist. Dies ist insbesondere der Fall, wenn das Lager als fluiddynamisches Gleitlager ausgebildet ist. Insofern soll nur in dem Betriebszustand beziehungsweise den Betriebszuständen, in welchem die Mindestdrehzahl durch die Drehzahl unterschritten wird, der (ausreichend große) Überdruck zwischen den Lagerteilen beziehungsweise in dem Lagerspalt mittels der Überdruckquelle hergestellt werden. In anderen Betriebszuständen ist dies nicht notwendig. Bei einem als fluidstatisches Lager ausgebildeten Lager ist es dagegen üblich, ihm stets den Überdruck mittels der Überdruckquelle bereitzustellen.

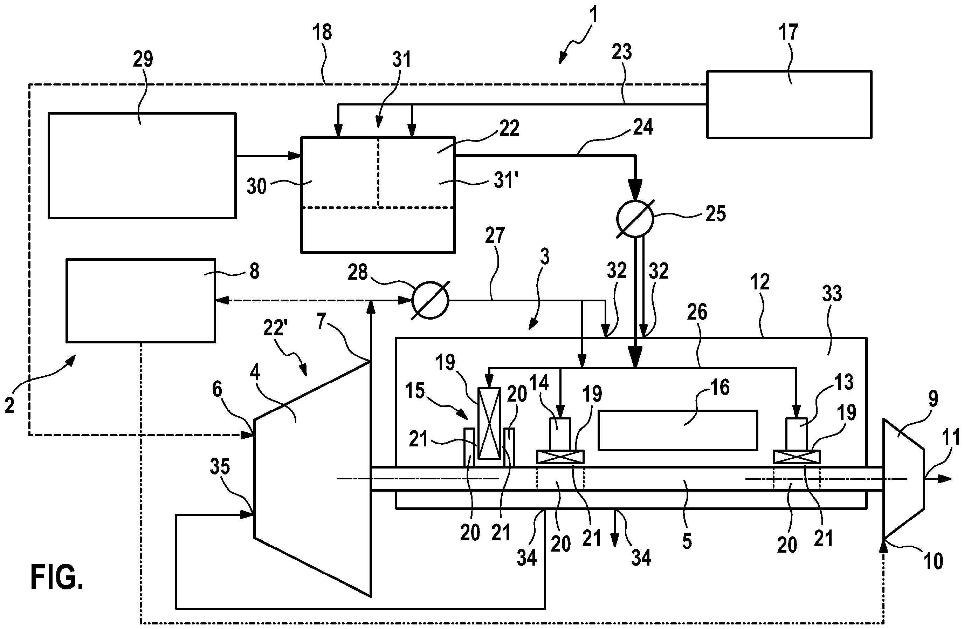

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Kraftfahrzeugsystemeinrichtung.

Die Figur zeigt eine Kraftfahrzeugsystemeinrichtung 1 mit einem Antriebsaggregat 2, welchem eine Ladereinrichtung 3 zugeordnet ist. Die Ladereinrichtung 3 verfügt über zumindest einen Verdichter 4, welchem zur Lagerung eines hier nicht im Detail dargestellten Verdichterlaufrads des Verdichters 4 eine Welle 5 zugeordnet ist. Der Verdichter 4 dient zum Verdichten von Fluid, insbesondere Gas, beispielsweise Luft, welches ihm durch einen Verdichtereinlass 6 zuführbar ist. Der Verdichter 4 stellt das verdichtete Fluid an einem Verdichterauslass 7 bereit. Beispielsweise wird das verdichtete Fluid dem Antriebsaggregat 2 zugeführt. Das Antriebsaggregat 2 ist beispielsweise ein Brennstoffzellenaggregat mit wenigstens einer Brennstoffzelle 8 und einer hier nicht dargestellten elektrischen Maschine, welche von der Brennstoffzelle 8 mit elektrischem Strom versorgt wird. Alternativ kann anstelle des Brennstoffzellenaggregats selbstverständlich eine Brennkraftmaschine vorgesehen sein.

In der hier dargestellten Ausführungsform ist die Ladereinrichtung 3 als Abgasturboladereinrichtung ausgebildet. Das bedeutet, dass sie neben dem Verdichter 4 über eine Turbine 9 verfügt. Der Turbine 9 ist dabei Abgas, insbesondere des Antriebsaggregats 2, über einen Turbineneinlass 10 zuführbar. In der Turbine 9 durchströmt das über den Turbineneinlass 10 zugeführte Abgas ein hier nicht dargestelltes Turbinenlaufrad, welches ebenfalls mittels der Welle 5 gelagert ist. Anschließend strömt das Abgas aus einem Turbinenauslass 11 aus der Turbine 9 aus, beispielsweise in einen hier nicht dargestellten Abgastrakt des Antriebsaggregats 2 beziehungsweise der Kraftfahrzeugsystemeinrichtung 1.

Sowohl das Verdichterlaufrad als auch das Turbinenlaufrad sind drehfest mit der Welle 5 verbunden. Über die Welle 5 liegt demnach eine Wirkverbindung zwischen dem Verdichter 4 und der Turbine 9 vor. Der Verdichter 4 ist somit mittels der Turbine 9 antreibbar, wenn dieser das Abgas zugeführt wird. Die Welle 5 ist zumindest bereichsweise in einem Rumpfgehäuse 12 angeordnet. Das Rumpfgehäuse 12 ist dabei üblicherweise zwischen dem Verdichter 4 und der Turbine 9 angeordnet. Auf diese Weise wird ein Aufheizen des dem Verdichter 4 zugeführten Fluids durch die Wärme des der Turbine 9 zugeführten Abgases zumindest vermindert. Das bedeutet jedoch auch, dass das Rumpfgehäuse 12 mit eben dieser Wärme beaufschlagt ist und durch diese aufgeheizt werden kann.

In dem Rumpfgehäuse 12 sind Lager 13, 14 und 15 angeordnet, welche einer Lagerung der Welle 5 dienen. Die Lager 13 bis 15 sind insoweit als Wellenlager ausgebildet. Die Lager 13 und 14 dienen als Radiallager, können also lediglich Kräfte in radialer Richtung, nicht jedoch in axialer Richtung aufnehmen. Das Lager 15 ist dagegen als Axiallager ausgebildet, verhindert also eine axiale Verlagerung der Welle 5, kann jedoch keine radialen Kräfte aufnehmen. Es versteht sich von selbst, dass eine solche Ausführungsform der Lager 13 bis 15 rein beispielhaft ist. Selbstverständlich kann jedes der Lager 13 bis 15 zum Aufnehmen von axialen, radialen oder axialen und radialen Kräften ausgelegt sein. Zusätzlich nimmt das Rumpfgehäuse 12 eine Antriebsvorrichtung 16 auf, welche beispielsweise als Elektromotor ausgeführt ist. Die Antriebsvorrichtung 16 ist mit der Welle 5 wirkverbunden oder wirkverbindbar. Das bedeutet, dass der Antrieb des Verdichters 4 nicht ausschließlich mittels der Turbine 9 vorgesehen sein muss, sondern dass ein ausschließlicher Betrieb oder zumindest eine Unterstützung durch die Antriebsvorrichtung 16 realisiert werden kann. Ersteres ist insbesondere in Betriebspunkten des Antriebsaggregats 2 vorgesehen, in welchen keine ausreichend große Menge Abgas zum Betrieb der Turbine 9 erzeugt wird.

Weiterhin weist die Kraftfahrzeugsystemeinrichtung 1 einen Fluideinlass 17 auf, an welchen der Verdichter 4 beziehungsweise der Verdichtereinlass 6 über eine Ansaugleitung 18 angeschlossen ist. Vorteilhafterweise verfügt der Fluideinlass 17 über einen Filter (hier nicht dargestellt).

Die Lager 13, 14 und 15 verfügen jeweils über ein erstes Lagerteil 19 und ein zweites Lagerteil 20, wobei das erste Lagerteil 19 stets stationär angeordnet ist und das zweite Lagerteil 20 dem Verdichterlaufrad des Verdichters 4 zugeordnet und mit diesem drehsteif verbunden ist. Entsprechend bewirkt eine Rotation des Verdichterlaufrads auch eine Rotation der zweiten Lagerteile 20 der Lager 13, 14 und 15. Die ersten Lagerteile 19 können insbesondere Lagerbuchsen der Lager 13, 14 und 15 sein, während die zweiten Lagerteile 20 zumindest im Falle der Radiallager 13 und 14 von einem Bereich der Welle 5 gebildet sein können. Im Falle des Axiallagers 15 kann das zweite Lagerteil 20 ein sich von der Welle 5 in radialer Richtung nach außen erstreckender Radialvorsprung sein, welcher zum axialen Festsetzen der Welle 5 mit dem ersten Lagerteil 19 zusammenwirkt. Zwischen den Lagerteilen 19 und 20 liegt jeweils ein Lagerspalt 21 vor. In diesen Lagerspalt 21 muss beim Betreiben der Ladereinrichtung 3 ein bestimmter Überdruck des darin befindlichen Fluids, insbesondere Luft, vorliegen. Ansonsten geraten die beiden Lagerteile 19 und 20 miteinander in Berührkontakt, sodass Mischreibung oder sogar Festkörperreibung zwischen ihnen auftritt. Dies kann, insbesondere aufgrund der zusätzlichen thermischen Belastung, zu einer Verkürzung der Lebensdauer der Lager 13 bis 15 führen.

Ist der in dem Lagerspalt 21 vorliegende Überdruck jedoch ausreichend groß, so liegt lediglich Fluidreibung zwischen den Lagerteilen 19 und 20 vor. Diese treten also beim Betreiben der Ladereinrichtung 3 nicht oder lediglich selten miteinander in Berührkontakt. Entsprechend ist die thermische Belastung verringert; es liegt eine deutlich größere Lebensdauer vor. Sind die Lager 13 bis 15 als fluiddynamische Lager ausgebildet, so stellt sich der ausreichend große Überdruck bei Erreichen oder Überschreiten einer Mindestdrehzahl durch die Drehzahl der Welle 5 selbsttätig ein. Dies ist aufgrund der Pumpwirkung der beiden Lagerteile 19 und 20 der Fall. Sie bilden, insbesondere bei Belastung, einen Keil aus, in den das Fluid hineintransportiert wird. Dabei wird der Druck, unter welchem das Fluid vorliegt, vergrößert, sodass der Überdruck hergestellt wird. Selbstverständlich kann ein Teil der Lager 13 bis 15 als fluiddynamische Lager und der andere Teil als fluidstatische Lager ausgebildet sein. Auch kann ein Teil der Lager 13 bis 15 als Wälzlager vorliegen.

Bei einer Drehzahl der Welle 5, welche kleiner als die Mindestdrehzahl ist, und auch wenn die Lager 13 bis 15 als fluidstatische Lager ausgebildet sind, ist es jedoch notwendig, den in dem Lagerspalt 21 vorliegenden Druck durch eine externe Einrichtung bereitzustellen oder zumindest zu vergrößern. Zu diesem Zweck ist an die Lager 13 bis 15 eine (erste) Überdruckquelle 22 angeschlossen, welche über eine Saugleitung 23 Fluid aus dem Fluideinlass 17 ansaugt, verdichtet und über eine Anschlussleitung 24 den Lagern 13 bis 15 zuführt. In der Anschlussleitung können dabei eine Querschnittsverminderungseinrichtung oder, wie hier dargestellt, eine Querschnittsverstelleinrichtung 25 vorgesehen sein. Mittels dieser ist es möglich, den in dem Lagerspalt 21 vorliegenden Überdruck steuernd und/oder regelnd einzustellen, insbesondere in- oder auszuschalten. Zusätzlich oder alternativ ist die Anschlussleitung 24 oder zumindest ein zwischen Anschlussleitung 24 und den Lagern 13 bis 15 vorgesehenen Verteiler 26 eine Überdruckleitung 27 angeschlossen, welche auf ihrer anderen Seite eine Strömungsverbindung zu dem Verdichterauslass 7 aufweist. Auch in der Überdruckleitung 27 ist eine Querschnittsverstelleinrichtung 28 vorgesehen. Der Verdichter 4 kann insoweit als zweite Überdruckquelle 22' dienen.

Der in dem Lagerspalt 21 vorliegende Überdruck kann also mittels der Überdruckquelle 22 und/oder mittels der zweiten Überdruckquelle 22', also dem Verdichter 4 den Lagern 13 bis 15 bereitgestellt werden. Beispielsweise wird der Überdruck mittels der Überdruckquellen 22 und 22' in einem Betriebszustand der Ladereinrichtung 3 bereitgestellt, in welchem das durch die Turbine 9 geleitete Abgas nicht ausreicht, um den Verdichter 4 zu betreiben beziehungsweise an dem Verdichterauslass 7 einen ausreichend hohen Überdruck bereitzustellen. Ist der an dem Verdichterauslass 7 anliegende Überdruck in einem weiteren Betriebszustand dagegen ausreichend, kann der in dem Lagerspalt 21 vorherrschende Überdruck ausschließlich mittels des Verdichters 4 erzeugt werden. In diesem Fall können die Überdruckquelle 22 und/oder die Überdruckquelle 22' abgeschaltet oder zumindest von dem jeweiligen Lager 13 bis 15 durch Unterbrechung der Strömungsverbindung abgekoppelt werden. Bei hohen Drehzahlen kann unter Umständen auf den Überdruck aus dem Verdichter 4 und/oder der Überdruckquelle 22 verzichtet werden.

Bevorzugt weist die Kraftfahrzeugsystemeinrichtung 1 einen Verbraucher 29 auf, für dessen Betreiben Unterdruck notwendig ist. Somit ist es notwendig, sowohl eine Unterdruckquelle 30 zum Bereitstellen des für den Betrieb des Verbrauchers 29 notwendigen Unterdrucks als auch die Überdruckquelle 22 vorzusehen. Sowohl die Überdruckquelle 22 als auch die Unterdruckquelle 30 sind üblicherweise elektrisch betriebene Pumpen. Aus diesem Grund ist es vorgesehen, dass sowohl die Überdruckquelle 22 als auch die Unterdruckquelle 30 Teil einer Tandempumpe 31 sind, mittels welcher sowohl Überdruck als auch Unterdruck bereitgestellt werden kann. Ein Unterdruck bereitstellende Teil wird dabei als Unterdruckteil und ein Überdruck bereitstellender als Überdruckteil 31' bezeichnet. Dabei ist für die Tandempumpe 31 lediglich ein elektrischer Antrieb notwendig. Es müssen also nicht mehrere separate Pumpen mit entsprechend mehreren Antrieben vorgesehen werden. Vielmehr reicht es, die Tandempumpe 31, welche nur den einen Antrieb aufweist, bereitzustellen. Mittels der Tandempumpe 31 ist es also möglich, sowohl den Verbraucher 29 mit Unterdruck aus der Unterdruckquelle 30 als auch die Lager 13 bis 15 mit Überdruck aus der Überdruckquelle 22 zu versorgen. Entsprechend wird eine Bauraum- und Gewichtsersparnis erzielt. Auch die Kosten können auf diese Weise gesenkt werden.

Zusätzlich kann es vorgesehen sein, dass das Rumpfgehäuse 12 einen oder mehrere Einlässe 32 aufweist, durch welche Fluid in einen Innenraum 33 des Rumpfgehäuses 12 gelangen kann. In dem Innenraum 33 sind die Lager 13 bis 15, die Antriebsvorrichtung 16 sowie die Welle 5 wenigstens bereichsweise angeordnet. Wenigstens einer der Einlässe 32 kann dabei an die Anschlussleitung 24 oder den Verteiler 26 und zumindest ein weiterer der Einlässe 32 an die Überdruckleitung 27 angeschlossen sein. Der erste Einlass 32 ist also strömungstechnisch mit der Überdruckquelle 22 und der zweite Einlass 32 mit dem Verdichter 4 beziehungsweise dessen Verdichterausgang 7 verbunden. Entsprechend kann unter Überdruck stehendes Fluid in den Innenraum 33 eingebracht werden.

Das Rumpfgehäuse 12 weist weiterhin wenigstens einen Auslass 34 auf, wobei einer der hier dargestellten Auslässe 34 strömungstechnisch mit einer Umgebung der Kraftfahrzeugsystemeinrichtung 1 und der andere der Auslässe 34 mit einem weiteren Verdichtereinlass 35 verbunden sind. Den Auslässen 34 können hier nicht dargestellte Querschnittsverstelleinrichtungen zugeordnet sein, mittels welchen der Fluidmassenstrom, welcher durch die Auslässe 34 aus dem Rumpfgehäuse 12 hinausgelangt, steuernd und/oder regelnd beziehungsweise schaltbar einstellbar ist. Auf diese Weise kann der in dem Innenraum 33 vorliegende Druck, also Unterdruck beziehungsweise Überdruck, eingestellt werden. Alternativ zu den Querschnittsverstellgliedern sind selbstverständlich Querschnittsverminderungsglieder ebenfalls verwendbar.

Bei einem Betreiben der Ladereinrichtung 3 wird mittels des Verdichters 4 oder der Überdruckquelle 22 Fluid über den Fluideinlass 17 angesaugt. Zumindest ein Teil des angesaugten Fluids wird dabei dem Rumpfgehäuse 12 beziehungsweise dessen Innenraum 33 entnommen. Auf diese Weise entsteht in dem Rumpfgehäuse 12 ein Fluidmassenstrom, insbesondere ausgehend von dem mindestens einen Einlass 32 bis hin zu dem mindestens einen Auslass 34. Dieser Fluidmassenstrom ist bevorzugt auf thermisch besonders hoch belastete Bereiche des Rumpfgehäuses 12 oder in diesem angeordnete Elemente, beispielsweise die Lager 13 bis 15 oder die Antriebsvorrichtung 16, gerichtet. Auf diese Weise wird eine zuverlässige Kühlung dieser Elemente beziehungsweise Bereiche gewährleistet.

Der Fluidmassenstrom sorgt zudem dafür, dass Feuchtigkeit, insbesondere Kondensat, aus dem Rumpfgehäuse 12 abgesaugt wird. Somit wird zusätzlich Korrosion innerhalb des Rumpfgehäuses 12 vermieden. Dies gilt insbesondere für Magnete der Antriebsvorrichtung 16, welche beispielsweise aus Seltenerdwerkstoffen bestehen und daher äußerst empfindlich sind. Insgesamt wird durch die genannten Maßnahmen, nämlich dem Aufbauen des Überdrucks in dem jeweiligen Lagerspalt 21 sowie dem Kühlen mittels des Fluidmassenstroms, die Lebensdauer der Lager 13 bis 15 deutlich vergrößert. Gleichzeitig werden durch die Verwendung der Tandempumpe 31 der benötigte Bauraum und die Kosten der Kraftfahrzeugsystemeinrichtung 1 verringert.

## Patentansprüche

1. Kraftfahrzeugsystemeinrichtung (1) mit einem Antriebsaggregat (2), dem eine Ladereinrichtung (3) zugeordnet ist, die einen Verdichter (4) mit wenigstens einem mittels zumindest eines Lagers (13,14,15) gelagerten Verdichterlaufrad aufweist, wobei das Lager (13,14,15) über ein stationäres erstes Lagerteil (19) und ein mit dem Verdichterlaufrad wirkverbundenes zweites Lagerteil (20) verfügt, wobei an das Lager (13,14,15) eine Überdruckquelle (22) angeschlossen ist, mittels welcher in einem zwischen dem ersten Lagerteil (19) und dem zweiten Lagerteil (20) vorliegenden Lagerspalt (21) ein Überdruck herstellbar ist, **dadurch gekennzeichnet, dass** die Überdruckquelle (22,22') Teil (31') einer Tandempumpe (31) ist, die neben dem Überdruck auch Unterdruck für einen Verbraucher (29) der Kraftfahrzeugsystemeinrichtung (1) bereitstellt.

2. Kraftfahrzeugsystemeinrichtung nach Anspruch 1, **dadurch gekennzeichnet, dass** strömungstechnisch zwischen der Überdruckquelle (22) und dem Lager (13,14,15) eine Querschnittsverminderungseinrichtung oder eine Querschnittsverstelleinrichtung (25) zur Einstellung des in dem Lagerspalt (21) hergestellten Überdrucks vorgesehen ist.

3. Kraftfahrzeugsystemeinrichtung nach einem der vorhergehenden Ansprüche, **dadurch gekennzeichnet, dass** das Verdichterlaufrad von einer Turbine (9) der Ladereinrichtung (3) und/oder einer elektrischen Antriebsvorrichtung (16) antreibbar ist.

4. Kraftfahrzeugsystemeinrichtung nach einem der vorhergehenden Ansprüche, **dadurch gekennzeichnet, dass** das Antriebsaggregat (2) ein Brennstoffzellenaggregat mit wenigstens einer Brennstoffzelle (8) und zumindest einer von der Brennstoffzelle (8) mit elektrischer Energie gespeisten elektrischen Maschine ist.

5. Kraftfahrzeugsystemeinrichtung nach einem der vorhergehenden Ansprüche, **dadurch gekennzeichnet, dass** die Tandempumpe (31) elektrisch angetrieben ist.

6. Kraftfahrzeugsystemeinrichtung nach einem der vorhergehenden Ansprüche, **dadurch gekennzeichnet, dass** das Lager (13,14,15) als aerodynamisches oder aerostatisches Gleitlager ausgeführt ist.

7. Kraftfahrzeugsystemeinrichtung nach einem der vorhergehenden Ansprüche, **dadurch gekennzeichnet, dass** das Lager (13,14,15) ein Axiallager (13,14) und/oder ein Radiallager (15) ist.

8. Kraftfahrzeugsystemeinrichtung nach einem der vorhergehenden Ansprüche, **dadurch gekennzeichnet, dass** der Verbraucher (29) ein Bremskraftverstärker ist.

9. Verfahren zum Betreiben einer Kraftfahrzeugsystemeinrichtung (1), insbesondere nach einem oder mehreren der vorhergehenden Ansprüche, wobei die Kraftfahrzeugsystemeinrichtung (1) mit einem Antriebsaggregat (2) ausgestattet ist, dem eine Ladereinrichtung (3) zugeordnet ist, die einen Verdichter (4) mit wenigstens einem mittels zumindest eines Lagers (13,14,15) gelagerten Verdichterlaufrad aufweist, wobei das Lager (13,14,15) über ein stationäres erstes Lagerteil (19) und ein mit dem Verdichterlaufrad wirkverbundenes zweites Lagerteil (20) verfügt, wobei_an das Lager (13,14,15) eine Überdruckquelle (22) angeschlossen ist, mittels welcher in einem zwischen dem ersten Lagerteil (19) und dem zweiten Lagerteil (20) vorliegenden Lagerspalt (21) in wenigstens einem Betriebszustand der Ladereinrichtung (3) ein Überdruck hergestellt wird, **dadurch gekennzeichnet, dass** die Überdruckquelle (22,22') Teil (31') einer Tandempumpe (31) ist, die neben dem Überdruck auch Unterdruck für einen Verbraucher (29) der Kraftfahrzeugsystemeinrichtung (1) bereitstellt.

10. Verfahren nach Anspruch 9, **dadurch gekennzeichnet, dass** nur in einem Betriebszustand, in welchem die Drehzahl des Verdichterlaufrads kleiner als eine bestimmte Mindestdrehzahl ist, mittels der Überdruckquelle (22) der Überdruck zwischen den Lagerteilen (19,20) hergestellt wird.

## Claims

1. Motor vehicle system device (1) having a drive unit (2) which is assigned a supercharger device (3) which has a compressor (4) with at least one compressor impeller which is mounted by means of at least one bearing (13, 14, 15), the bearing (13, 14, 15) having a stationary first bearing part (19) and a second bearing part (20) which is operatively connected to the compressor impeller, a positive pressure source (22) being connected to the bearing (13, 14, 15), by means of which positive pressure source (22) a positive pressure can be generated in a bearing gap (21) which is present between the first bearing part (19) and the second bearing part (20), **characterized in that** the positive pressure source (22, 22') is part (31') of a tandem pump (31) which, in addition to the positive pressure, also provides negative pressure for a consumer (29) of the motor vehicle system device (1).

2. Motor vehicle system device according to Claim 1, **characterized in that** a cross section reducing device or a cross section adjusting device (25) for setting the positive pressure which is generated in the bearing gap (21) is provided in flow terms between the positive pressure source (22) and the bearing (13, 14, 15).

3. Motor vehicle system device according to either of the preceding claims, **characterized in that** the compressor impeller can be driven by a turbine (9) of the supercharger device (3) and/or an electric drive apparatus (16).

4. Motor vehicle system device according to one of the preceding claims, **characterized in that** the drive unit (2) is a fuel cell unit with at least one fuel cell (8) and at least one electric machine which is fed with electric power by the fuel cell (8).

5. Motor vehicle system device according to one of the preceding claims, **characterized in that** the tandem pump (31) is driven electrically.

6. Motor vehicle system device according to one of the preceding claims, **characterized in that** the bearing (13, 14, 15) is configured as an aerodynamic or aerostatic plain bearing.

7. Motor vehicle system device according to one of the preceding claims, **characterized in that** the bearing (13, 14, 15) is an axial bearing (13, 14) and/or a radial bearing (15).

8. Motor vehicle system device according to one of the preceding claims, **characterized in that** the consumer (29) is a brake booster.

9. Method for operating a motor vehicle system device (1), in particular according to one or more of the preceding claims, the motor vehicle system device (1) being equipped with a drive unit (2) which is assigned a supercharger device (3) which has a compressor (4) with at least one compressor impeller which is mounted by means of at least one bearing (13, 14, 15), the bearing (13, 14, 15) having a stationary first bearing part (19) and a second bearing part (20) which is operatively connected to the compressor impeller, a positive pressure source (22) being connected to the bearing (13, 14, 15), by means of which positive pressure source (22) a positive pressure can be generated in a bearing gap (21) which is present between the first bearing part (19) and the second bearing part (20) in at least one operating state of the supercharger device (3), **characterized in that** the positive pressure source (22, 22') is part (31') of a tandem pump (31) which, in addition to the positive pressure, also provides negative pressure for a consumer (29) of the motor vehicle system device (1).

10. Method according to Claim 9, **characterized in that** the positive pressure is generated between the bearing parts (19, 20) by means of the positive pressure source (22) only in an operating state, in which the rotational speed of the compressor impeller is lower than a defined minimum rotational speed.

## Revendications

1. Dispositif de système de véhicule automobile (1) avec un groupe propulseur (2), auquel est associé un dispositif de suralimentation (3), qui présente un compresseur (4) avec au moins une roue mobile de compresseur supportée au moyen d'au moins un palier (13, 14, 15), dans lequel le palier (13, 14, 15) est doté d'une première partie de palier stationnaire (19) et d'une seconde partie de palier (20) activement reliée à la roue mobile de compresseur, dans lequel une source de surpression (22) est raccordée au palier (13, 14, 15), au moyen de laquelle une ,surpression peut être créée dans une fente de palier (21) située entre la première partie de palier (19) et la seconde partie de palier (20), **caractérisé en ce que** la source de surpression (22, 22') est une partie (31') d'une pompe tandem (31), qui fournit en plus de la surpression également une dépression pour un consommateur (29) du dispositif de système de véhicule automobile (1).

2. Dispositif de système de véhicule automobile selon la revendication 1, **caractérisé en ce qu'**il est prévu en condition d'écoulement entre la source - de surpression (22) et le palier (13, 14, 15) un dispositif de réduction de section transversale ou un dispositif de réglage de section transversale (25) pour le réglage de la surpression créée dans la fente de palier (21).

3. Dispositif de système de véhicule automobile selon l'une quelconque des revendications précédentes, **caractérisé en ce que** la roue mobile de compresseur peut être entraînée par une turbine (9) du dispositif de suralimentation (3) et/ou par un dispositif d'entraînement électrique (16).

4. Dispositif de système de véhicule automobile selon l'une quelconque des revendications précédentes, **caractérisé en ce que** le groupe propulseur (2) est un groupe de piles à combustible avec au moins une pile à combustible (8) et au moins une machine électrique alimentée en énergie électrique par la pile à combustible (8) .

5. Dispositif de système de véhicule automobile selon l'une quelconque des revendications précédentes, **caractérisé en ce que** la pompe tandem (31) est entraînée électriquement.

6. Dispositif de système de véhicule automobile selon l'une quelconque des revendications précédentes, **caractérisé en ce que** le palier (13, 14, 15) est constitué par un palier lisse aérodynamique ou aérostatique.

7. Dispositif de système de véhicule automobile selon l'une quelconque des revendications précédentes, **caractérisé en ce que** le palier (13, 14, 15) est un palier axial (13, 14) et/ou un palier radial (15).

8. Dispositif de système de véhicule automobile selon l'une quelconque des revendications précédentes, **caractérisé en ce que** le consommateur (29) est un amplificateur de force de freinage.

9. Procédé de conduite d'un dispositif de système de véhicule automobile (1), en particulier selon une ou plusieurs des revendications précédentes, dans lequel le dispositif de système de véhicule automobile (1) est équipé d'un groupe propulseur (2), auquel est associé un dispositif de suralimentation (3), qui présente un compresseur (4) avec au moins une roue mobile de compresseur supportée au moyen d'au moins un palier (13, 14, 15), dans lequel le palier (13, 14, 15) est doté d'une première partie de palier stationnaire (19) et d'une seconde partie de palier (20) activement reliée à la roue mobile de compresseur, dans lequel une source de surpression (22) est raccordée au palier (13, 14, 15), au moyen de laquelle une surpression est créée dans une fente de palier (21) située entre la première partie de palier (19) et la seconde partie de palier (20) dans au moins un état de fonctionnement du dispositif de suralimentation (3), **caractérisé en ce que** la source de surpression (22, 22') est une partie (31') d'une pompe tandem (31), qui fournit en plus de la surpression également une dépression pour un consommateur (29) du dispositif de système de véhicule automobile (1).

10. Procédé selon la revendication 9, **caractérisé en ce que** l'on crée la surpression entre les parties de palier (19, 20) au moyen de la source de surpression (22) uniquement dans un état de fonctionnement, dans lequel le nombre de tours de la roue mobile de compresseur est inférieur à un nombre de tours minimal déterminé.
